Europäisches Patentamt

European Patent Office

Office européen des brevets

(19)

(11) Numéro de publication: **0 159 936**
**B1**

(12) **FASCICULE DE BREVET EUROPEEN**

(45) Date de publication du fascicule du brevet:
**24.06.87**

(51) Int. Cl.⁴: **C 07 C 148/00,** C 07 C 149/00,
C 10 M 135/04

(21) Numéro de dépôt: **85400682.2**

(22) Date de dépôt: **05.04.85**

(54) Procédé de préparation d'oléfines polysulfurées, les produits obtenus et leur utilisation comme additifs pour lubrifiants.

(30) Priorité: **20.04.84 FR 8406278**
**10.10.84 FR 8415641**

(43) Date de publication de la demande:
**30.10.85 Bulletin 85/44**

(45) Mention de la délivrance du brevet:
**24.06.87 Bulletin 87/26**

(84) Etats contractants désignés:
**BE CH DE FR GB IT LI LU NL**

(56) Documents cités:
**EP - A - 0 032 281**
**US - A - 2 257 290**

(73) Titulaire: **INSTITUT FRANCAIS DU PETROLE, 4, Avenue
de Bois-Préau, F-92502 Rueil-Malmaison (FR)**

(72) Inventeur: **Born, Maurice, 72, rue du Vieux Pont,
F-92000 Nanterrre (FR)**
Inventeur: **Parc, Guy, 27, rue du Chateau, F-92500 Rueil
Malmaison (FR)**
Inventeur: **Briquet, Lucienne, 26, avenue de la
République, F-92500 Rueil Maimaison (FR)**
Inventeur: **Paquer, Daniel, Résidence Minerve 2, rue
d'Anvers, F-54500 Vandoeuvre (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne le domaine des additifs organiques sulfurés utilisés notamment pour améliorer les propriétés extrême-pression des lubrifiants; elle concerne plus particulièrement un procédé amélioré pour la préparation d'additifs du type oléfines polysulfurées et les produits obtenus par ce procédé.

On trouve décrit dans l'art antérieur un certain nombre de procédés visant à la préparation d'oléfines polysulfurées utilisables comme additifs extrême-pression pour lubrifiants.

En particulier, les brevets des Etats-Unis 3 471 404 et 3 697 499 décrivent un procédé dont les étapes principales sont les suivantes:

(1) On fait réagir du monochlorure de soufre avec un excès d'une oléfine de 2 à 5 atomes de carbone, en particulier l'isobutylène, à une température de 20 à 80°C, de manière à former un adduct;

(2) on fait réagir l'adduct de la première étape avec un sulfure de métal alcalin (de préférence du sulfure de sodium) et du soufre élémentaire, utilisés dans un rapport de 1,8 à 2,2 moles de sulfure métallique par atome-gramme de soufre, la proportion de sulfure de métal alcalin étant en outre de 0,8 à 1,2 mole par mole d'adduct, et la réaction étant effectuée en présence d'un alcool ou d'un solvant hydroalcoolique, au reflux; et

(3) on fait réagir le produit obtenu, qui contient de 1 à 3% de chlore, avec une base minérale en solution aqueuse au reflux, jusqu'à ce que la teneur résiduelle en chlore du produit soit inférieure à 0,5%.

Il est indiqué dans ces brevets antérieurs que la teneur en soufre des produits obtenus pouvait être de 40 à 60% en masse. En réalité, elle est le plus souvent voisine de 46% en masse. Ces produits peuvent être utilisés comme additifs extrême-pression pour les huiles lubrifiantes, les fluides de transmission ou les graisses, les bases lubrifiantes considérées consistant en des huiles minérales et certaines huiles synthétiques.

Par ailleurs, le brevet des Etats-Unis 4 204 969 décrit un procédé assez voisin pour préparer des oléfines polysulfurées utilisables comme additifs extrême-pression pour huiles lubrifiantes; ce procédé comprend les étapes principales suivantes:

(1) On fait réagir à environ 30-100°C du monochlorure de soufre avec une monooléfine aliphatique de $C_3$ à $C_6$ (en général l'isobutène) de préférence en présence d'un promoteur consistant en un alcool inférieur, de manière à former un adduct;

(2) on fait réagir cet adduct avec du soufre et du sulfure de sodium (préparé par exemple à partir de NaOH, NaHS et/ou $H_2S$) dans un rapport de 0,1 à 0,4 atome-gramme de soufre par mole de sulfure de sodium en milieu hydroalcoolique à une température allant de 50°C au reflux; et l'on récupère le produit obtenu sans traitement au moyen d'une base.

Il est indiqué dans l'exemple unique que le produit préparé a une teneur en soufre de 49% en masse et une viscosité à 37,8°C (100°F) de 8,6 mm²/s (cSt). Lorsque, utilisant les procédés décrits dans l'art antérieur, on cherche à augmenter la teneur en soufre des additifs par mise en jeu d'une proportion accrue de soufre élémentaire, par rapport au sulfure ou à l'hydrogénosulfure alcalin mis en jeu, on obtient des proportions qui ne sont plus suffisamment solubles dans les huiles lubrifiantes synthétiques (par exemple du type polyalphaoléfines) ou même dans les huiles lubrifiantes minérales, pour être utilisables comme additifs extrême-pression. Par ailleurs, la viscosité cinématique des produits ainsi obtenus est en général trop élevée.

La présente invention se propose de fournir un nouveau procédé de préparation permettant d'obtenir, tout en mettant en jeu une proportion accrue de soufre élémentaire, des produits qui ne présentent pas les inconvénients indiqués ci-dessus.

Un autre avantage du procédé de l'invention est qu'il permet, si on le désire par exemple pour des raisons économiques, de réduire, dans la deuxième étape, la durée d'introduction du produit d'addition oléfine + chlorure de soufre obtenu dans la première étape, dans le milieu réactionnel contenant les réactifs soufrés (sulfure ou hydrogénosulfure alcalin et, dans la plupart des cas, soufre élémentaire), sans que l'on aboutisse à des produits qui présenteraient une viscosité cinématique trop élevée et seraient en outre insolubles dans les huiles synthétiques (par exemple du type polyalphaoléfines) ou même dans les huiles minérales, comme ce serait le cas pour les procédés de l'art antérieur.

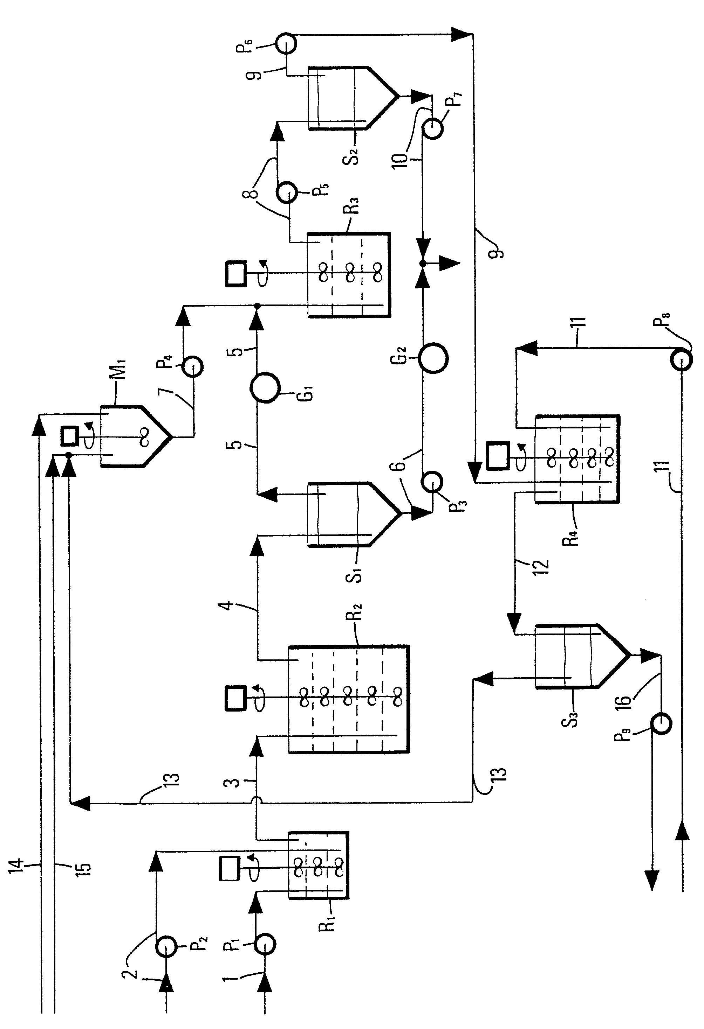

La figure annexée représente un schéma de réalisation en continu d'une partie des étapes du procédé de l'invention.

D'une manière générale, le procédé de préparation d'oléfines polysulfurées de l'invention comprend les étapes suivantes:

(1) On fait réagir, par exemple à une température de 20 à 80°C, au moins un composé choisi parmi le monochlorure et le dichlorure de soufre avec au moins une monooléfine aliphatique de 2 à 5 atomes de carbone, formant ainsi un produit d'addition (ou adduct);

(2) on met en contact ledit adduct et au moins un halogénure d'hydrocarbyle, qui sera défini plus loin, avec au moins un composé sulfuré choisi parmi les sulfures, les hydrogénosulfures et les polysulfures de métaux alcalins, d'ammonium ou de métaux alcalino-terreux et le plus souvent, du soufre élémentaire, au sein d'un milieu aqueux ou hydroalcoolique, maintenu par exemple à une température de 20 à 100°C pendant l'introduction des divers réactifs;

(3) on chauffe le mélange résultant à une température allant par exemple de 50°C à la température de reflux, on laisse décanter, on élimine la phase aqueuse inférieure et on récupère l'oléfine polysulfurée dans la phase organique supérieure; et

(4) éventuellement, on traite le produit obtenu par un composé basique, tel qu'une base minérale.

Dans le procédé de l'invention, les oléfines de départ peuvent renfermer de 2 à 5 atomes de carbone, et être utilisées seules ou en mélanges. On utilise le plus souvent l'isobutylène. On peut aussi prévoir d'utiliser ces oléfines en mélange avec des proportions mineures d'oléfines de plus de 5 atomes de carbone (par exemple du diisobutylène).

L'oléfine peut être utilisée en une proportion de 1,5 à 2,5 moles, de préférence de 1,8 à 2,2 moles, par mole de monochlorure et/ou de dichlorure de soufre. Elle est en général introduite dans le monochlorure et/ou le dichlorure de soufre liquide à une température de 20 à 80° C, plus spécifiquement de 30 à 50° C.

Dans l'étape (2) du procédé de l'invention, l'halogénure d'hydrocarbyle utilisé conjointement à l'«adduct» obtenu à l'issue de l'étape (1) peut consister en un chlorure, un bromure ou un iodure d'alkyle, linéaire ou ramifié, en $C_1$ à $C_{12}$ (de préférence en $C_1$ à $C_8$), de cycloalkyle, éventuellement substitué, en $C_5$ à $C_{12}$ (de préférence en $C_6$), ou d'arylalkyle, éventuellement substitué, en $C_6$ à $C_{12}$ (de préférence en $C_7$ et $C_8$). Pour des raisons opératoires, on considère comme particulièrement avantageux les halogénures d'hydrocarbyle dont le point d'ébullition va par exemple jusqu'à environ 100-150° C. L'halogénure d'hydrocarbyle mis en jeu consiste essentiellement en un monohalogénure.

On peut citer comme exemples notamment les chlorures, bromures et iodures de méthyle, d'éthyle, d'isopropyle, de n-propyle, de tert-butyle, d'isobutyle, de n-butyle, de tert-amyle, d'isoamyle, de n-amyle, de n-hexyle, d'éthyl-2 hexyle, de n-octyle, de cyclohexyle et de benzyle et leurs mélanges. On utilise avantageusement le chlorure d'isopropyle, le chlorure et le bromure de n-butyle, le chlorure de n-octyle, le chlorure de cyclohexyle ou le chlorure de benzyle.

La proportion d'halogénure d'hydrocarbyle utilisée doit être suffisante pour que l'on observe une amélioration marquée des propriétés du produit final. Elle est en général de 1 à 70% en atomes-grammes d'halogène par rapport au nombre total d'atomes-grammes d'halogène de l'ensemble adduct + halogénure d'hydrocarbyle. Cette proportion correspond en général à un nombre de moles d'halogénure d'hydrocarbyle d'environ 0,015 à 1,9 pour 100 g d'adduct, en particulier lorsque la monooléfine de départ est l'isobutylène.

Dans le cadre de l'invention, il est possible de remplacer au moins en partie le monohalogénure d'hydrocarbyle tel que défini plus haut par au moins un composé hydrocarboné monohalogéné portant en outre au moins un groupement fonctionnel comportant un ou plusieurs hétéroatomes (tels que l'oxygène et/ou l'azote et/ou le soufre).

Parmi ces composés hydrocarbonés monohalogénés fonctionnels, on utilisera principalement les composés monochlorés ou monobromés; ils seront avantageusement choisis parmi

les composés monohalogénés renfermant au moins une fonction alcool et notamment:
— des halogénures de monoalcools aliphatiques, alicycliques ou aromatique-aliphatiques renfermant par exemple de 2 à 18 atomes de carbone, tels que par exemple les chloro-2 et bromo-2 éthanols, les chloro- et bromo-propanols, hexanols, heptanols, octanols, nonanols, décanols, undécanols et dodécanols, et les alcools chloro- ou bromo-benzyliques, et les alcools chloro- ou bromo-phényléthyliques;
— des halogénures de polyols, tels que par exemple le chloro-3 ou le bromo-3 propanediol-1,2 (et les dérivés époxy correspondants; par exemple le chloro-1 ou le bromo-1 époxy-2,3 propane);
— des halogénures de monoalcools (poly-) oxyalkylénés, tels que par exemple les chloro- et bromo-(poly-) éthoxyéthanols, (poly-) éthoxypropanols, (poly-) propoxyéthanols et (poly-) propoxypropanols;

les composés monohalogénés renfermant au moins une fonction phénol, tels que par exemple des chloro- et bromo-phénols non substitués ou substitués par exemple par des groupements alkyles;

les composés monohalogénés renfermant au moins une fonction carboxylique, tels que par exemple les acides chloro- et bromo-acétiques, propioniques, butyriques, valériques, benzoïques et succiniques;

les composés monohalogénés renfermant au moins une fonction amine, notamment des composés aliphatiques, alicycliques ou aromatique-aliphatiques, tels que par exemple le chlorhydrate de chloro-éthylamine et les chlorhydrates de chloro-N,N diméthyl-, diéthyl- et dipropyl-éthylamines, les chloro- et bromo-benzylamines et les chloro- et bromo-phényléthylamines;

les composés monohalogénés renfermant au moins une fonction amide, tels que par exemple les chloro- et bromo-acétamides et propionamides; ou encore

les composés monohalogénés renfermant au moins une fonction thiol, tels que par exemple les chloro- et bromo-mercaptobenzothiazoles, les chloro- et bromo-phénylmercaptans et les chloro- et bromo-benzylmercaptans.

Parmi les composés monohalogénés fonctionnels présentant des groupements de plusieurs types différents, on peut citer:

des composés à fonctions hydroxyle et acide carboxylique, tels que par exemple l'acide chloro-5 salicylique ou l'acide chloro-3 hydroxy-4 mandélique;

des composés à fonctions amine ou acide carboxylique, tels que par exemple la chloro-4 phénylalanine; ou encore

des composés à fonctions hydroxyle et amine.

Sans sortir du cadre de l'invention, on peut utiliser ces composés hydrocarbonés monohalogénés fonctionnels conjointement aux halogénures d'hydrocarbyle non fonctionnels tels que définis plus haut, et ce en toutes proportions.

Dans la suite on utilisera indifféremment les expressions (mono-) halogénures d'hydrocarbyle et composés hydrocarbonés monohalogénés pour désigner d'une manière générale les composés non fonctionnels et les composés fonctionnels mis en jeu, ou leurs mélanges.

Lorsque, dans l'étape (2) du procédé de l'invention, on met en jeu au moins un composé monohalogéné fonctionnel tel que défini plus haut, il est avantageux d'effectuer la réaction de cette étape en présence d'une faible quantité (par exemple de 0,1 à 10% en masse) d'au moins un catalyseur de transfert de phases, notamment un halogénure d'ammonium quaternaire (par exemple le chlorure de tétrabutylammonium), ou un halogénure d'alkylphosphonium, ou encore un «éther-couronne» (ou cryptate).

Le composé sulfuré utilisé dans l'étape (2) peut être choisi parmi les sulfures, les hydrogénosulfures et les polysulfures de métaux alcalins (par exemple sodium ou potassium), de métaux alcalino-terreux (par exemple magnésium ou calcium) ou d'ammonium. On utilise le plus souvent le sulfure de sodium, l'hydrogénosulfure de sodium (par exemple en présence de soude) et les polysulfures de sodium. Ce composé est mis en jeu en une proportion par rapport à l'ensemble adduct (tel qu'obtenu à l'issue de l'étape (1)) + halogénure d'hydrocarbyle (tel que défini ci-dessus) d'environ 0,4 à 0,8 mole de composé sulfuré par atome-gramme d'halogène contenu dans l'ensemble adduct + halogénure d'hydrocarbyle.

Le soufre élémentaire éventuellement mis en jeu, dans l'étape (2), conjointement au composé sufluré, peut être avec celui-ci dans un rapport molaire allant jusqu'à environ 7/1, ce qui correspond à un rapport inverse qui peut être aussi faible qu'environ 0,14/1.

Lorsque l'on désire que la teneur en soufre du produit final ne soit pas trop élevée (jusqu'à environ 45 à 55% en masse), on met en jeu un rapport molaire entre le soufre élémentaire et le composé sulfuré allant par exemple jusqu'à environ 4/1, ce rapport étant dans ce cas le plus souvent d'environ 0,4/1 à 3,3/1. Le rapport inverse est alors d'au moins environ 0,25/1, le plus souvent d'environ 0,3/1 à 3,5/1. Dans ce cas, il n'est pas nécessaire que la proportion d'hydrocarbure monohalogéné mise en jeu soit très élevée; une proportion de 1 à 40% (comptée en atomes-grammes d'halogène par rapport au nombre total d'atomes-grammes d'halogène et l'ensemble formé par l'«adduct» et l'hydrocarbure monohalogéné) convient en général. Cette proportion correspond à environ 0,015-0,55 atome-gramme d'halogène pour 100 g d'«adduct», en particulier lorsque la monooléfine de départ est l'isobutylène.

On obtient alors les oléfines polysulfurées qui peuvent présenter une teneur en soufre allant en général jusqu'à environ 45-55% en masse et quelquefois un peu plus (environ 60% en masse). Leur viscosité cinématique à 100° C varie en fonction de leur teneur en soufre. Elle peut être d'environ 4 à 20 mm²/s. Leur teneur en halogène (principalement en chlore) est en général inférieure à environ 1% en masse et le plus souvent à environ 0,6% en masse.

Ces produits sont en général solubles dans les huiles minérales et la plupart des huiles d'origine synthétique, à des concentrations substantielles, pour certains même en toutes proportions. Les produits qui présentent les teneurs en soufre les plus élevées peuvent avoir une solubilité plus limitée dans les huiles lubrifiantes, cette solubilité étant cependant suffisante pour certaines des applications auxquelles ils peuvent être destinés (additifs pour huiles de travail des métaux, par exemple).

Lorsque l'on désire, dans le produit final, des teneurs en soufre plus élevées (d'environ 60 à 65% en masse), on peut mettre en jeu un rapport molaire entre le soufre élémentaire et le composé sulfuré allant par exemple jusqu'à environ 7/1, plus particulièrement d'environ 3,3/1 à 7/1 (le rapport inverse peut alors être aussi faible qu'environ 0,14/1, plus particulièrement de 0,14/1 à 0,3/1). On utilise alors une proportion plus élevée d'hydrocarbure monohalogéné, par exemple de 40 à 70% (exprimée en atomes-grammes d'halogène par rapport au nombre total d'atomes-grammes d'halogène de l'ensemble formé par l'«adduct» et l'hydrocarbure monohalogéné), plus particulièrement d'environ 45 à 65%. Ces proportions correspondent à environ 0,55-1,9 atome-gramme d'halogène (plus particulièrement environ 0,7-1,5 atome-gramme d'halogène) pour 100 g d'«adduct», notamment lorsque la monooléfine de départ est l'isobutylène.

On peut alors obtenir des produits qui, bien que présentant une teneur en soufre très élevée (d'environ 60 à 65% en masse, pour une teneur en chlore inférieure à 1% en masse), sont peu visqueux (viscosité à 100° C de 4 à 15 mm²/s) et sont encore solubles dans des huiles minérales de faible viscosité, utilisées dans le travail des métaux (comme la coupe, le formage) à des concentrations suffisantes pour améliorer les propriétés extrême-pression de ces huiles.

Dans l'étape (2), on introduit (ou on forme) en général le composé sulfuré et on introduit le soufre élémentaire éventuel dans de l'eau ou, de préférence, dans un mélange d'eau et de monoalcool aliphatique léger (renfermant par exemple de 1 à 4 atomes de carbone).

Comme monoalcools aliphatiques légers, on peut citer: le méthanol, l'éthanol, le n-propanol, l'isopropanol, le n-butanol, l'isobutanol et le tert-butanol. L'isopropanol est préféré. Le mélange eau-alcool utilisé peut contenir par exemple de 2 à 60% en masse d'alcool (de préférence de 5 à 45%) par rapport à la masse d'eau.

Dans le milieu ainsi constitué, maintenu sous agitation (à 20-100° C), on ajoute conjointement le produit d'addition issu de l'étape (1) et l'halogénure d'hydrocarbyle en un temps de quelques minutes à plusieurs heures, par exemple de 10 minutes à 3 heures.

Dans l'étape (3), on chauffe (à une température allant de 50° C à la température de reflux) par exemple pendant 3 à 10 heures.

On peut éventuellement mettre en œuvre une étape (4) de traitement du produit obtenu à l'issue de l'étape (3) au moyen d'un composé basique, qui peut être par exemple une base minérale (telle que la soude ou la potasse) en solution aqueuse. Les solutions aqueuses utilisées peuvent avoir par exemple des concentrations en soude ou en potasse d'environ 0,5 à 20% en masse.

La réaction de l'étape (2) du procédé de l'invention et les traitements ultérieurs peuvent être effectués en continu. Les opérations se font de préférence selon un processus d'alimentation des réactifs en courants parallèles et à contacts multiples (plutôt qu'à contre-courant), ce qui est favorable quant aux propriétés des produits finalement obtenus.

On peut opérer sous une légère surpression (la pression absolue pouvant aller par exemple jusqu'à environ 3 bars = 0,3 MPa), ce qui permet d'élever les températures réactionnelles et les vitesses de réaction sans altérer les propriétés des produits finaux. Un tel mode de réalisation sera décrit plus en détail dans l'exemple 43, en relation avec la figure annexée.

Les produits obtenus par le procédé selon l'invention peuvent être avantageusement utilisés comme additif extrême-pression pour huiles lubrifiantes.

Une première application concerne plus particulièrement la formulation d'huiles destinées à la lubrification des engrenages.

Les huiles de base peuvent être d'origine minérale ou synthétique. Les huiles synthétiques incluent notamment les oligomères d'oléfines tels que les tri-, tétra- et pentamères du décène-1 obtenus par oligomérisation en présence d'acides de LEWIS. D'autres α-oléfines peuvent bien sûr être employées, par exemple les α-oléfines en $C_6$ à $C_{14}$.

On peut encore utiliser des alkylbenzènes, tels que les mono- et dialkylbenzènes, ou encore les esters synthétiques provenant d'acides mono- ou polycarboxyliques (tels que l'acide sébacique, les acides gras, etc.) et de monoalcools ou de polyols (tels que l'éthyl-2 hexanol, le triméthylolpropane, etc.).

Dans cette application, on peut utiliser des oléfines polysulfurées dont la préparation met en jeu aussi bien des proportions de soufre relativement faibles (rapports molaires composé soufré/soufre élémentaire par exemple de 1,8/1 à 2,5/1) que des proportions de soufre plus élevées. Pour des raisons de solubilité dans le lubrifiant choisi, la valeur du rapport molaire composé soufré/soufre élémentaire pourra être aussi basse qu'environ 0,4/1, pour les additifs utilisables dans les huiles minérales, et aussi basse qu'environ 1,5/1 (ou moins), pour les additifs utilisables dans les huiles synthétiques.

Les oléfines polysulfurées considérées peuvent alors être ajoutées aux huiles lubrifiantes à des concentrations allant par exemple de 0,5 à 7% en masse.

Ces additifs peuvent être utilisés en combinaison avec des additifs phosphorés, tels que les dialkyl- ou diaryldithiophosphates métalliques, les phosphites et les phosphates organiques.

D'autres additifs classiques peuvent être ajoutés, tels que des antioxydants, des antirouille, des passivateurs de cuivre, des antimousse, des réducteurs de frottements, dans des proportions usuelles.

Une seconde application des produits préparés selon l'invention comme additifs extrême-pression pour lubrifiants concerne plus particulièrement la formulation d'huiles destinées au travail des métaux (coupe, formage, etc.).

Cette application est particulièrement avantageuse avec les produits dont la préparation met en jeu les rapports molaires composé soufré/soufre élémentaire les plus faibles par exemple de 0,14/1 à 0,3/1, ces produits (très riches en soufre) étant de façon surprenante encore suffisamment solubles dans les huiles de base d'origine minérale servant à la formulation des lubrifiants pour le travail des métaux (par exemple 100 Neutral Solvent).

Dans cette application, la concentration d'additif utilisée est en général de 0,1 à 10% et de préférence de 0,5 à 5% en masse par rapport à l'huile lubrifiante. Dans cette application, d'autres additifs classiques peuvent être ajoutés, tels que des paraffines chlorées en une proportion correspondant par exemple à 2-10% en masse de chlore par rapport à l'huile lubrifiante.

Les exemples suivants illustrent l'invention, sans la limiter. Les exemples 1, 2, 5, 7, 10, 12, 22, 24 et 27 sont donnés à titre de comparaison.

*Exemple 1* (comparatif)

Dans un réacteur de 10 l, chauffé à 40-45° C, on introduit 3800 g de monochlorure de soufre $S_2Cl_2$ (28,14 moles), puis, par l'intermédiaire d'un tube plongeant, on introduit, sous la surface du $S_2Cl_2$ constamment agité, 3560 g d'isobutène (68,54 moles), dans lequel on a dissous 35,6 g de méthanol. La température du milieu réactionnel est maintenue entre 45 et 50° C durant toute la durée d'introduction de l'isobutène (3 heures). On obtient ainsi 7040 g de produit d'addition, que l'on désigne par le terme d'«adduct».

Dans un second réacteur de 1 l, on introduit successivement 296 g d'eau, 159,3 g de $Na_2S$ à 60% en écailles (1,225 mole), 19,5 g de soufre finement divisé (0,609 atome-g) et 31 cm³ d'isopropanol (le rapport molaire $Na_2S$/S utilisé dans l'essai est égal à 2). Le mélange est chauffé à 80° C sous agitation pendant une heure, puis la température est ramenée à 45° C.

On introduit ensuite dans le milieu aqueux constamment agité 250 g du produit d'addition obtenu précédemment, l'introduction étant effectuée en 0,75 heure. La température du milieu réactionnel s'élève progressivement de 45 à 75° C; on chauffe ensuite le mélange à reflux total (88-95° C) pendant 6 heures sous vigoureuse agitation.

Après décantation, on élimine la phase aqueuse inférieure, puis on ajoute à la phase organique 200 cm³ d'une solution aqueuse de soude à 10% en masse. Le mélange est porté de nouveau à reflux pendant 6 heures.

La phase organique récupérée après décantation est lavée trois fois avec 200 cm³ d'eau; elle est séchée sous un vide de 2666 Pa à 100° C pendant 1 heure, puis filtrée en présence de terre de diatomées. On obtient ainsi 189 g d'un liquide jaune-orangé dont les caractéristiques sont les suivantes:

| | |
|---|---|
| S (% masse) | = 46,2 |
| Cl (% masse) | = 0,37 |
| Viscosité à 100° C (mm²/s) | = 12,0 |

*Exemple 2* (comparatif)

En opérant dans des conditions rigoureusement identiques à celles de l'exemple 1, on introduit les 250 g de produit d'addition isobutène/$S_2Cl_2$ dans la solution aqueuse de polysulfure alcalin en 0,2 heure. Après réaction puis traitement (effectué comme décrit dans l'exemple 1), on récupère 192,5 g d'un produit visqueux jaune-orangé dont les caractéristiques sont les suivantes :

S (% masse) = 45,4
Cl (% masse) = 1,17
Viscosité à 100° C (mm²/s) = 30,0

*Exemple 3*

En opérant dans des conditions opératoires rigoureusement identiques à celles décrites dans l'exemple 1, on introduit successivement 296 g d'eau, 159,3 g de $Na_2S$ à 60%, 19,5 g de soufre et 31 cm³ d'isopropanol (comme précédemment, le rapport molaire $Na_2S$/S est égal à 2).

On introduit ensuite dans le milieu aqueux constamment agité un mélange constitué de 225 g de produit d'addition $S_2Cl_2$/isobutène de l'exemple 1 et 18,72 g de chlorure de n-butyle (0,202 mole) en 0,2 heure. Après réaction puis traitement à la soude, lavage à l'eau, séchage et filtration, on récupère 182,1 g d'un liquide jaune-orangé dont les caractéristiques sont les suivantes :

S (% masse) = 45,7
Cl (% masse) = 1,08
Viscosité à 100° C (mm²/s) = 14,1

*Exemple 4*

L'expérimentation de l'exemple 3 est réalisée dans les mêmes conditions de temps d'introduction et de concentrations de $Na_2S$, de soufre et d'isopropanol (rapport molaire $Na_2S$/S de 2), en utilisant cette fois un mélange constitué de 200 g de produit d'addition de l'exemple 1 et de 37,45 g de chlorure de n-butyle (0,405 mole). Après traitements, on obtient 181,6 g d'un liquide jaune-orangé dont les caractéristiques sont les suivantes :

S (% masse) = 45,0
Cl (% masse) = 0,68
Viscosité à 100° C (mm²/s) = 5,7

*Exemple 5* (comparatif)

En opérant dans les conditions opératoires indiquées pour l'exemple 1, on utilise 22,4 g de soufre (dans cet essai, le rapport molaire $Na_2S$/S est alors de 1,75). On introduit ensuite les 250 g du produit d'addition isobutène/$S_2Cl_2$ dans la solution aqueuse de polysulfure alcalin en 2 heures. Après réaction puis traitement à la soude, lavage à l'eau, séchage et filtration, on récupère 192 g d'un liquide jaune-orangé visqueux dont les caractéristiques sont les suivantes :

S (% masse) = 47,1
Cl (% masse) = 0,92
Viscosité à 100° C (mm²/s) = 19,2

*Exemple 6*

L'expérimentation est réalisée dans les mêmes conditions de temps d'introduction et de concentrations de $Na_2S$, de soufre et d'isopropanol (rapport molaire $Na_2S$/S de 1,75), en utilisant cette fois un mélange constitué de 200 g du produit d'addition de l'exemple 1 et de 37,45 g de chlorure de n-butyle (0,405 mole). Après traitements, on obtient 190 g d'un liquide jaune-orangé dont les caractéristiques sont les suivants :

S (% masse) = 45,8
Cl (% masse) = 0,6
Viscosité à 100° C (mm²/s) = 4,7

*Exemple 7* (comparatif)

En opérant dans des conditions opératoires identiques à celles de l'exemple 1, on utilise 26 g de soufre (dans cet essai, le rapport molaire $Na_2S$/S est alors de 1,5). Après réaction puis traitements, on récupère 195 g d'un produit très visqueux jaune-orangé dont les caractéristiques sont les suivantes :

S (% masse) = 45,2
Cl (% masse) = 1,34
Viscosité à 100° C (mm²/s) = 35,5

*Exemple 8*

L'expérimentation de l'exemple 7 est reprise dans les mêmes conditions opératoires, en utilisant cette fois un mélange constitué de 237,5 g de produit d'addition isobutène/$S_2Cl_2$ et 9,4 g de chlorure de n-butyle (0,102 mole). Après réaction et traitements, on récupère 187 g d'un produit jaune-orangé présentant les caractéristiques suivantes :

S (% masse) = 46,8
Cl (% masse) = 0,95
Viscosité à 100° C (mm²/s) = 14,7

*Exemple 9*

L'expérimentation de l'exemple 7 est reprise dans les mêmes conditions opératoires, en utilisant cette fois un mélange constitué de 200 g de produit d'addition $S_2Cl_2$/isobutène et de 37,45 g de chlorure de n-butyle (0,405 mole). On récupère 170 g d'un produit fluide dont les caractéristiques sont les suivantes :

S (% masse) = 46,4
Cl (% masse) = 0,60
Viscosité à 100° C (mm²/s) = 4,2

*Exemple 10* (comparatif)

L'expérimentation de l'exemple 1 est renouvelée en utilisant 78,4 g de soufre (dans cet essai, le rapport molaire $Na_2S$/S est égal à 0,5). Après réaction des 250 g de produit d'addition isobutène/$S_2Cl_2$ puis traitements, on récupère 212 g d'un produit très visqueux jaune-orangé présentant les caractéristiques suivantes :

S (% masse) = 44,7
Cl (% masse) = 1,54
Viscosité à 100° C (mm²/s) = 39,8

*Exemple 11*

L'expérimentation de l'exemple 10 est reprise dans les mêmes conditions opératoires en utilisant un mélange constitué de 200 g de produit d'addition isobutène/$S_2Cl_2$ et de 37,45 g de chlorure de butyle (0,405 mole). Après réaction puis traitements, on récupère 202 g de produit dont les caractéristiques sont les suivantes:

| | |
|---|---|
| S (% masse) | = 48,1 |
| Cl (% masse) | = 0,44 |
| Viscosité à 100° C (mm²/s) | = 9,6 |

*Exemple 12* (comparatif)

On introduit successivement dans le réacteur de 1 l: 296 g d'eau, 159,3 g de $Na_2S$ à 60%, 98 g de soufre (le rapport molaire $Na_2S$/S utilisé dans cet exemple est alors de 0,4). Après chauffage à 80° C pendant une heure puis refroidissement à 45° C, on ajoute 250 g du produit d'addition de l'exemple 1 en 1,5 heure. Après un reflux de 8 heures, on décante la phase organique, que l'on traite comme dans l'exemple 1. On récupère 230 g d'un produit très visqueux dont les caractéristiques sont les suivantes:

| | |
|---|---|
| S (% masse) | = 46,2 |
| Cl (% masse) | = 2,43 |
| Viscosité à 100° C (mm²/s) | = 47,5 |

*Exemple 13*

L'expérimentation de l'exemple 12 est renouvelée en utilisant un mélange constitué de 187,5 g d'adduct et de 47,4 g de chlorure de n-butyle (0,512 mole). On récupère, après réaction puis traitements, 225 g d'un produit qui présente les caractéristiques suivantes:

| | |
|---|---|
| S (% masse) | = 52,2 |
| Cl (% masse) | = 0,74 |
| Viscosité à 100° C (mm²/s) | = 14,2 |

*Exemple 14*

L'expérimentation est effectuée dans les mêmes conditions que celles de l'exemple 13, en utilisant 120,8 g de soufre (le rapport molaire $Na_2S$/S est dans cet exemple de 0,32) et un mélange de 187,5 g de produit d'addition isobutène/$S_2Cl_2$ et de 47,4 g de chlorure de n-butyle (0,512 mole). Après réaction puis traitements, on recueille 253 g de produit dont les caractéristiques sont les suivantes:

| | |
|---|---|
| S (% masse) | = 58,6 |
| Cl (% masse) | = 0,61 |
| Viscosité à 100° C (mm²/s) | = 18,7 |

Les caractéristiques des produits des exemples 1 à 14 sont indiquées dans le tableau I.

En particulier, les essais de solubilité dont les résultats sont mentionnés sont réalisés en incorporant les produits des exemples 1 à 14 à la concentration de 5% en masse dans des huiles lubrifiantes du grade de viscosité SAE 90, l'une étant une huile minérale raffinée au solvant, l'autre une huile d'origine synthétique (polyalphaoléfine P.A.O.).

*(Tableau en page suivante)*

Cette concentration de 5% est voisine de celle généralement utilisée pour la formulation des huiles d'engrenages d'automobiles. Les déterminations sont effectuées à 20° C et après stockage en chambre froide à −5° C. Dans ces essais, les produits qui ne sont que partiellement solubles à la concentration considérée sont déclarés insolubles.

*Exemple 15*

L'expérimentation de l'exemple 4 est reprise en introduisant dans la solution de polysulfure de sodium le mélange des 200 g de produit d'addition isobutène/$S_2Cl_2$ et des 37,45 g de chlorure de n-butyle (0,405 mole) en 0,75 heure (rapport $Na_2S$/S molaire = 2). Après réaction puis traitements, on récupère 187 g de produit dont les caractéristiques sont les suivantes:

| | |
|---|---|
| S (% masse) | = 45,6 |
| Cl (% masse) | = 0,51 |
| Viscosité à 100° C (mm²/s) | = 5,3 |

*Exemple 16*

L'expérimentation de l'exemple 15 est reprise en substituant les 37,45 g de chlorure de n-butyle (0,405 mole) par la même quantité molaire de bromure de n-butyle (55,44 g). Après réaction puis traitements dans des conditions identiques, on recueille 185 g de produit dont les caractéristiques sont les suivantes (X représentant la somme chlore + brome):

| | |
|---|---|
| S (% masse) | = 45,4 |
| X (% masse) | = 0,68 |
| Viscosité à 100° C (mm²/s) | = 5,5 |

*Exemple 17*

L'expérimentation de l'exemple 15 est renouvelée en substituant les 37,45 g de chlorure de n-butyle par la même quantité molaire de chlorure de cyclohexyle (47,98 g). Après réaction puis traitements, on recueille 187 g de produit dont les caractéristiques sont les suivantes:

| | |
|---|---|
| S (% masse) | = 45,2 |
| Cl (% masse) | = 0,54 |
| Viscosité à 100° C (mm²/s) | = 4,5 |

*Exemple 18*

L'expérimentation de l'exemple 15 est renouvelée en substituant les 37,45 g de chlorure de n-butyle par la même quantité molaire de chlorure de benzyle (51,21 g). Après réaction puis traitements, on obtient 189 g de produit dont les caractéristiques sont les suivantes:

| | |
|---|---|
| S (% masse) | = 45,3 |
| Cl (% masse) | = 0,72 |
| Viscosité à 100° C (mm²/s) | = 4,7 |

*Exemple 19*

L'expérimentation de l'exemple 15 est renouvelée en substituant les 37,45 g de chlorure de n-butyle par la même quantité molaire de chlorure de n-octyle (60,15 g). Après réaction puis traitements, on obtient 194 g de produit dont les caractéristiques sont les suivantes:

| | |
|---|---|
| S (% masse) | = 44,1 |
| Cl (% masse) | = 0,49 |
| Viscosité à 100° C (mm²/s) | = 4,7 |

0 159 936

Tableau I

| Exemple | Conditions opératoires | | | | Caractéristiques des produits | | | Solubilité à 5% masse dans SAE 90 | | | |
|---|---|---|---|---|---|---|---|---|---|---|---|
| | Adduct (g) | Chlorure de n-butyle (g) | Durée introd. chlorure de n-butyle + adduct (h) | $Na_2S/S$ (molaire) | Viscosité 100°C $(mm^2/s)$ | S (% masse) | Cl (% masse) | Minérale | | P.A.O. | |
| | | | | | | | | 20°C | −5°C | 20°C | −5°C |
| 1* | 250 | 0 | 0,75 | 2 | 12,0 | 46,2 | 0,37 | sol | sol | insol | insol |
| 2* | 250 | 0 | 0,2 | 2 | 30,0 | 45,4 | 1,17 | insol | insol | insol | insol |
| 3 | 225 | 18,72 | 0,2 | 2 | 14,1 | 45,7 | 1,08 | sol | sol | insol | insol |
| 4 | 200 | 37,45 | 0,2 | 2 | 5,7 | 45,0 | 0,68 | sol | sol | sol | sol |
| 5* | 250 | 0 | 2 | 1,75 | 19,2 | 47,1 | 0,92 | insol | insol | insol | insol |
| 6 | 200 | 37,45 | 2 | 1,75 | 4,7 | 45,8 | 0,6 | sol | sol | sol | sol |
| 7* | 250 | 0 | 0,75 | 1,5 | 35,5 | 45,2 | 1,34 | insol | insol | insol | insol |
| 8 | 237,5 | 9,4 | 0,75 | 1,5 | 14,7 | 46,8 | 0,95 | sol | sol | insol | insol |
| 9 | 200 | 37,45 | 0,75 | 1,5 | 4,2 | 46,4 | 0,60 | sol | sol | sol | sol |
| 10* | 250 | 0 | 0,75 | 0,5 | 39,8 | 44,7 | 1,54 | insol | insol | insol | insol |
| 11 | 200 | 37,45 | 0,75 | 0,5 | 9,6 | 48,1 | 0,44 | sol | sol | insol | insol |
| 12* | 250 | 0 | 1,5 | 0,4 | 47,5 | 46,2 | 2,43 | insol | insol | insol | insol |
| 13 | 187,5 | 47,4 | 1,5 | 0,4 | 14,2 | 52,2 | 0,74 | sol | sol | insol | insol |
| 14** | 187,5 | 47,4 | 1,5 | 0,32 | 18,7 | 58,6 | 0,61 | insol | insol | insol | insol |

* Exemples comparatifs.
** L'additif de l'exemple 14 est néanmoins soluble à la concentration de 1% en masse dans une huile 100 Neutral Solvent.

## Exemple 20

L'expérimentation de l'exemple 15 est reprise en substituant les 37,45 g de chlorure de n-butyle par la même quantité molaire de chlorure d'isopropyle (31,77 g). Après réaction puis traitements, on recueille 179 g de produit dont les caractéristiques sont les suivantes:

S (% masse) = 45,9
Cl (% masse) = 0,53
Viscosité à 100° C ($mm^2$/s) = 5,7

Les caractéristiques des produits décrits dans les exemples 15 à 20 sont réunies dans le tableau II ci-après. En particulier, les essais de solubilité dont les résultats sont mentionnés sont réalisés en incorporant les produits des exemples 15 à 20 à la concentration de 5% en masse dans une huile lubrifiante synthétique de type polyalphaoléfine de grade de viscosité SAE 90, à −5° C.

Dans le tableau II, RX représente l'halogénure d'hydrocarbyle utilisé et X l'halogène considéré.

*Tableau II*

| Exemple | Caractéristiques opératoires | | | | Caractéristiques des produits | | | |
|---------|---------------------|-----------------|-------------------------------------|--------------------------|------------------------------------|------------------|------------------|------------------------------------------------|
| | Adduct (g) | RX utilisé (g) | Durée introd. adduct + RX (h) | $Na_2S$/S (molaire) | Viscosité 100°C ($mm^2$/s) | S (% masse) | X (% masse) | Solubilité à 5% masse dans P.A.O. à −5°C |
| 15 | 200 | 37,45[1] | 0,75 | 2 | 5,3 | 45,6 | 0,51 | sol |
| 16 | 200 | 55,49[2] | 0,75 | 2 | 5,5 | 45,4 | 0,68 | sol |
| 17 | 200 | 50,0 [3] | 0,75 | 2 | 4,5 | 45,2 | 0,54 | sol |
| 18 | 200 | 51,2 [4] | 0,75 | 2 | 4,7 | 45,3 | 0,72 | sol |
| 19 | 200 | 60,2 [5] | 0,75 | 2 | 4,7 | 44,1 | 0,49 | sol |
| 20 | 200 | 31,8 [6] | 0,75 | 2 | 5,7 | 45,9 | 0,53 | sol |

(1) RX = Chlorure de n-butyle
(2) RX = Bromure de n-butyle
(3) RX = Chlorure de cyclohexyle
(4) RX = Chlorure de benzyle
(5) RX = Chlorure de n-octyle
(6) RX = Chlorure d'isopropyle

## Exemple 21

Dans un réacteur de 1 l en acier inoxydable résistant à la pression, équipé d'une double enveloppe pour le chauffage ou la réfrigération, d'une agitation énergique (type turbine), d'une contre-pale, d'une prise de température interne, d'un manomètre, d'une tubulure reliée à une pompe doseuse sous pression, on introduit successivement:

159,3 g de $Na_2S$ à 60% (1,225 mole), 19,5 g de soufre (0,609 atome-g) et 31 $cm^3$ d'isopropanol (le rapport molaire $Na_2S$/S utilisé est égal à 2).

A l'aide de la pompe doseuse, on introduit dans la solution aqueuse de polysulfure constamment agitée un mélange constitué de 174,7 g du produit d'addition $S_2Cl_2$/isobutène de l'exemple 1 et de 30,6 g de chlorure de méthyle (0,61 mole environ) en 0,75 heure.

Le mélange est chauffé pendant 8 heures à 105° C; on observe une diminution progressive de la pression en fonction du temps. On refroidit le réacteur à la température de l'ambiance puis, après ouverture du réacteur, on élimine la phase aqueuse.

Le produit organique obtenu est traité pendant 6 heures vers 95° C comme dans les exemples précédents avec une solution de soude à 10% en masse, lavé à l'eau, séché puis filtré.

On récupère 155 g d'un produit jaune-orangé dont les caractéristiques sont les suivantes:

S (% masse) = 46,5
Cl (% masse) = 0,5
Viscosité à 100° C ($mm^2$/s) = 5,2
Solubilité à 5% masse et à −5° C
dans huile minérale: soluble
dans PAO: soluble

## Exemple 22 (comparatif)

Dans un réacteur de 1 l, on introduit 145 g de dichlorure de soufre $SCl_2$ (1,407 mole), puis, par l'intermédiaire d'un tube plongeant, on introduit sous la surface du $SCl_2$ constamment agité 178 g d'isobutène (3,43 moles) dans lequel on a dissous 1,78 g de méthanol. La température de réaction est maintenue entre 45 et 50° C durant toute la durée de l'introduction de l'isobutène (0,5 heure). On obtient ainsi 301,5 g de produit d'addition.

Dans un second réacteur de 1 l, on introduit successivement 296 g d'eau, 159,3 g de $Na_2S$ à 60% en écaille (1,225 mole), 39,2 g de soufre finement divisé (1,225 atome-g) et 31 $cm^3$ d'isopropanol (le rapport molaire $Na_2S$/S utilisé dans cet essai est égal à 1). Le mélange est chauffé 1 heure à 80° C, puis la température est ramenée à 45° C.

On introduit ensuite dans le milieu constamment agité 214,2 g de produit d'addition obtenu précédemment, l'introduction étant effectuée en 0,5 heure. La température du milieu réactionnel s'élève progressivement de 45 à 75° C; on chauffe ensuite le mélange à reflux total (88-95° C) pendant 6 heures sous agitation vigoureuse. Après décantation, on élimine la phase aqueuse inférieure, puis on ajoute à la phase organique 200 $cm^3$ d'une

solution aqueuse de soude à 10% en masse. Le mélange est porté à reflux pendant 6 heures.

La phase organique récupérée après décantation est lavée trois fois à l'eau, elle est séchée sous un vide de 2666 Pa à 100° C pendant 1 heure, puis elle est filtrée en présence de terre de diatomées. On obtient ainsi 180 g d'un produit visqueux jaune-orangé dont les caractéristiques sont les suivantes:

S (% masse)                = 44,1
Cl (% masse)               = 1,59
Viscosité à 100° C (mm²/s) = 47,3

*Exemple 23*

En opérant dans des conditions opératoires rigoureusement identiques à celles décrites dans l'exemple 22, on introduit dans la solution aqueuse de polysulfure de sodium (Na$_2$S/S = 1 molaire) un mélange constitué de 37,45 g de chlorure de n-butyle (0,405 mole) et de 171,3 g de produit d'addition isobutène/SCl$_2$, l'introduction étant effectuée en 0,5 heure. Après traitement, on obtient 182 g d'un liquide fluide jaune-orangé dont les caractéristiques sont les suivantes:

S (% masse)                = 45,8
Cl (% masse)               = 0,64
Viscosité à 100° C (mm²/s) = 7,2

Les caractéristiques des produits décrits dans les exemples 22 et 23 sont indiquées dans le tableau III. Comme précédemment, les essais de solubilité sont réalisés en incorporant les produits des exemples 22 et 23 à la concentration de 5% en masse dans des huiles lubrifiantes SAE 90 (une huile minérale et une huile synthétique de type P.A.O.).

*Tableau III*

| Produit de l'exemple | Caractéristiques des produits | | | Solubilité à 5% masse dans SAE 90 | | | |
|---|---|---|---|---|---|---|---|
| | Viscosité 100°C (mm²/s) | S (% masse) | Cl (% masse) | Minérale | | P.A.O. | |
| | | | | 20°C | −5°C | 20°C | −5°C |
| 22* | 47,3 | 44,1 | 1,59 | insol | insol | insol | insol |
| 23 | 7,2 | 45,8 | 0,64 | sol | sol | sol | sol |
| * Exemple comparatif. | | | | | | | |

*Exemple 24* (comparatif)

Dans un réacteur de 1 l, on introduit 162 g d'une solution aqueuse de SHNa à 32% en masse, 74 g d'une solution aqueuse de soude à 50%, 79,65 g d'isopropanol et 14,8 g de soufre finement divisé (dans cet essai, le rapport molaire SHNa/S est égal à 2). On agite pendant 5 min, on ajoute 99 cm³ d'eau, puis on chauffe à 75° C.

On ajoute à cette solution aqueuse de polysulfure de sodium 250 g du produit d'addition isobutène/S$_2$Cl$_2$ préparé dans l'exemple 1, l'addition étant effectuée en 2 heures à la température de 75° C. Le mélange est ensuite chauffé à reflux pendant 4 heures, après quoi l'isopropanol est distillé à 90° C sous pression atmosphérique puis sous un vide de 2666 Pa.

Après décantation, la phase organique est lavée avec 125 cm³ d'eau et 100 cm³ de benzène. On décante de nouveau puis on lave une seconde fois la phase organique avec les mêmes quantités d'eau et de benzène que précédemment. On porte à reflux pendant 0,5 heure, on laisse refroidir et on décante. La phase organique récupérée est évaporée sous un vide de 2666 Pa à 100° C pour éliminer le benzène. Après filtration en présence de terre de diatomées, on recueille 201,1 g de produit jaune-orangé dont les caractéristiques sont les suivantes:

S (% masse)                = 48,6
Cl (% masse)               = 0,75
Viscosité à 100° C (mm²/s) = 6,1

*Exemple 25*

L'expérimentation de l'exemple 24 est reprise en utilisant un mélange constitué de 237,5 g de produit d'addition S$_2$Cl$_2$/isobutène et de 9,4 g de chlorure de n-butyle (0,102 mole). Après réaction puis traitement, on obtient 190 g d'un produit fluide qui présente les caractéristiques suivantes:

S (% masse)                = 47,4
Cl (% masse)               = 0,62
Viscosité à 100° C (mm²/s) = 5,7

*Exemple 26*

L'expérimentation de l'exemple 24 est renouvelée en utilisant un mélange constitué de 200 g de produit d'addition isobutène/S$_2$Cl$_2$ et de 37,45 g de chlorure de n-butyle (0,405 mole). Après réaction puis traitement, on recueille 176,1 g de produit dont les caractéristiques sont les suivantes:

S (% masse)                = 46,8
Cl (% masse)               = 0,59
Viscosité à 100° C (mm²/s) = 4,3

*Exemple 27* (comparatif)

L'expérimentation de l'exemple 24 est reprise en utilisant 59,25 g de soufre (dans cet essai, le rapport molaire SHNa/S est égal à 0,5). Après réaction de 250 g de produit d'addition isobutène/S$_2$Cl$_2$ puis traitement, on recueille 253 g d'un produit jaune-orangé qui présente les caractéristiques suivantes:

S (% masse) = 55,4
Cl (% masse) = 0,93
Viscosité à 100° C (mm²/s) = 14,1

## Exemple 28

L'expérimentation de l'exemple 27 est reprise en utilisant un mélange constitué de 200 g de produit d'addition $S_2Cl_2$/isobutène et de 37,45 g de chlorure de n-butyle (0,405 mole). Après réaction puis traitement, on récupère 214 g de produit dont les caractéristiques sont les suivantes:

S (% masse) = 55,0
Cl (% masse) = 0,54
Viscosité à 100° C (mm²/s) = 8,0

Les caractéristiques des produits décrits dans les exemples 24 à 28 sont rassemblées dans le tableau IV.

Comme précédemment, les essais de solubilité sont réalisés en incorporant à la concentration de 5% en masse les produits des exemples 21 à 25 dans des huiles SAE 90 (une huile minérale et une huile synthétique de type P.A.O.).

## Exemple 29

Dans un réacteur de 1 l, on introduit successivement 214,4 g d'une solution aqueuse à 32% en masse de SHNa, 74 g d'une solution aqueuse de soude à 50%, 78,4 g de soufre finement divisé et 79,65 g d'isopropanol (dans cet essai, le rapport molaire SHNa/S est égal à 0,5). On agite pendant 5 minutes, on ajoute 99 cm³ d'eau, puis on chauffe à 80° C et l'on refroidit à 45° C.

On introduit ensuite dans le milieu constamment agité un mélange constitué de 200 g du produit d'addition isobutène/$S_2Cl_2$ obtenu dans l'exemple 1 et de 37,45 g de chlorure de n-butyle (0,405 mole), la durée d'introduction étant de 0,75 heure. Après 6 heures de reflux, on décante, on écarte la phase hydroalcoolique et l'on traite la phase organique avec 200 cm³ d'une solution aqueuse de soude à 10% pendant 6 heures.

Après décantation, la phase organique est récupérée, lavée trois fois avec 200 cm³ d'eau, séchée sous un vide de 2666 Pa à 100° C pendant 1 heure, puis filtrée en présence de terre de diatomées. On récupère ainsi 197 g d'un produit jaune-orangé soluble à la concentration minimum de 5% en masse dans l'huile SAE 90 d'origine minérale (à 20° C et −5° C). Les caractéristiques du produit ainsi obtenu sont les suivantes:

S (% masse) = 51,7
Cl (% masse) = 0,47
Viscosité à 100° C (mm²/s) = 9,27

## Exemple 30

L'expérience de l'exemple 11 est reprise en utilisant 159,3 g de $Na_2S$ à 60% en écailles, 218 g d'eau, 78,4 g de soufre finement divisé et 79,65 g d'isopropanol (dans cet essai, le rapport molaire $Na_2S$/S est égal à 0,5), puis le mélange est chauffé à 75° C.

L'expérimentation est poursuivie dans les conditions de l'exemple 24, en introduisant dans la solution de polysulfure alcalin ainsi obtenue un

*Tableau IV*

| Produit de l'exemple | $\dfrac{\text{SHNa}}{\text{S}}$ (molaire) | n-BuCl (g) | Produit d'addition $S_2Cl_2$/ isoC₄ (g) | Caractéristiques du produit | | | Solubilité à 5% masse dans SAE 90 | | | |
|---|---|---|---|---|---|---|---|---|---|---|
| | | | | | | | Minérale | | P.A.O. | |
| | | | | S (% masse) | Cl (% masse) | Viscosité 100°C (mm²/s) | 20°C | −5°C | 20°C | −5°C |
| 24* | 2 | 0 | 250 | 48,6 | 0,75 | 6,1 | sol | sol | insol | insol |
| 25 | 2 | 9,4 | 237,5 | 47,4 | 0,62 | 5,7 | sol | sol | sol | insol |
| 26 | 2 | 37,45 | 200 | 46,8 | 0,59 | 4,3 | sol | sol | sol | sol |
| 27* | 0,5 | 0 | 250 | 55,4 | 0,93 | 14,1 | insol | insol | insol | insol |
| 28 | 0,5 | 37,45 | 200 | 55,0 | 0,54 | 8,0 | sol | sol | insol | insol |

* Exemple comparatif.

mélange constitué de 200 g de produit d'addition isobutène/$S_2Cl_2$ et de 37,45 g de chlorure de n-butyle (0,405 mole), l'addition étant effectuée en 2 heures. Après réaction puis traitements, on recueille 195 g d'un produit jaune-orangé soluble à la concentration minimum de 5% en masse dans l'huile minérale SAE 90 (à 20° C et à −5° C). Les caractéristiques du produit ainsi obtenu sont les suivantes:

S (% masse)              = 53,1
Cl (% masse)             = 0,54
Viscosité à 100° C (mm²/s)   = 8,92

### Exemple 31: Mesure de l'activité corrosive de produits selon l'invention

On réalise des essais de corrosion à la lame de cuivre selon la norme ASTM D-130 (NF M 07-015), à partir d'une huile minérale SAE 90 contenant 5% en masse d'additif, en utilisant certains des additifs préparés dans les exemples précédents.

Les résultats obtenus sont rassemblés dans le tableau V. Ils sont exprimés par une cotation comprenant un nombre (de 1 à 4), ce nombre étant suivi d'une lettre précisant la nuance de la corrosion de la lame de cuivre.

*Tableau V*

| Produit de l'exemple | S dans l'additif (% masse) | 3 heures à | |
|---|---|---|---|
| | | 100°C | 121°C |
| 4 | 45,0 | 1a | 1b |
| 8 | 46,8 | 2a | 1b |
| 9 | 46,4 | 1b | 2a |
| 11 | 48,1 | 2e | 3b |
| 13 | 52,2 | 3a | 4a |
| 26 | 46,8 | 3b | 3c |
| 28 | 55,0 | 4c | 4c |

Pour la formulation d'huiles d'engrenages d'automobiles, on utilisera plus spécialement les produits conduisant à une cotation inférieure ou égale à 3 (en particulier à 121° C), tels que les produits des exemples 4, 8, 9 et 11. D'autre part, pour la formulation d'huiles pour le travail des métaux, on peut utiliser tous les produits préparés selon l'invention et préférentiellement ceux qui conduisent à des cotations de corrosion élevées, tels que ceux des exemples 13, 26 et 28, notamment pour les métaux ferreux.

### Exemple 32: Evaluation des propriétés extrême-pression d'additifs selon l'invention

On a réalisé des essais mettant en évidence les propriétés extrême-pression des additifs préparés dans les exemples 4, 9 et 11, dans des formulations du type huiles d'engrenages.

A — Dans une première série d'essais, les produits des exemples 4, 9 et 11 ont été étudiés avec une machine TIMKEN, selon une procédure d'essai décrite dans l'ASTM D 2782-71, à la concentration de 3% en masse dans une huile minérale SAE 90; les résultats obtenus ont été rassemblés dans le tableau VI.

*Tableau VI*

| Additif de l'exemple | Charge (livres)* | | Surface d'empreinte (mm²) |
|---|---|---|---|
| | «passe» | «ne passe pas» | |
| sans additif | 6 | 9 | 9,1 |
| 4 | 30 | 35 | 19,5 |
| 9 | 40 | 45 | 20,8 |
| 11 | 40 | 45 | 20,8 |
| * 1 livre ≃ 0,4536 kg | | | |

Ces résultats montrent que l'utilisation des additifs de l'invention augmente très nettement la charge de grippage des surfaces métalliques lubrifiées.

B — Dans une seconde série d'essais, les propriétés extrême-pression de ces mêmes additifs ont été étudiées à l'aide d'une machine 4 billes selon les procédures de l'ASTM D 2783 et de l'ASTM D 2266, à la concentration de 1,5% en masse dans l'huile SAE 90; les résultats obtenus ont été rassemblés dans le tableau VII.

*(Tableau en page suivante)*

Ces résultats montrent que l'emploi des additifs de l'invention se traduit par une augmentation très sensible de l'indice charge-usure et de la charge de soudure des billes.

### Exemple 33

Dans un réacteur de 1 l, on introduit successivement 296 g d'eau, 159,3 g de $Na_2S$ à 60% en écailles (1,225 mole), 152,3 g de soufre finement divisé (4,75 atomes-grammes) et 31 cm³ d'isopropanol, le rapport molaire $Na_2S$/S utilisé dans cet essai étant de 0,258. Le mélange est chauffé à 80° C sous agitation pendant une heure, puis la température est ramenée à 45° C.

On introduit ensuite, dans le milieu aqueux constamment agité, un mélange constitué de 125 g du produit d'addition obtenu comme décrit dans l'exemple 1 (soit environ 1,01 atome-gramme de chlore) et de 93,4 g de chlorure de n-butyle (1,01 mole), l'introduction étant effectuée en 1,5 heure. La température du milieu réactionnel s'élève progressivement de 45 à 75° C; on chauffe ensuite le mélange pendant 6 heures à 75° C, puis pendant 2 heures à reflux total (80-85° C) pour parfaire la réaction.

Après décantation, on élimine la phase aqueuse, puis on ajoute à la phase organique 200 cm³ d'une solution aqueuse de soude à 4% en masse. Le mélange est porté de nouveau à reflux pendant 6 heures.

La phase organique récupérée après décantation est lavée trois fois avec 200 cm³ d'eau; elle est séchée sous un vide de 2666 Pa à 100° C pendant 1 heure, puis filtrée en présence de terre de diatomées. On obtient ainsi 176 g d'un liquide jaune-orangé dont les caractéristiques sont les suivantes:

*Tableau VII*

| Additif de l'exemple | Indice charge-usure | Charge de soudure (kg) | Diamètre d'empreinte des billes 1 h sous 40 kg (mm) |
|---|---|---|---|
| sans | 22,2 | 60 | 0,80 |
| 4 | 64,4 | 400 | 0,64 |
| 9 | 62,9 | 400 | 0,61 |
| 11 | 65,6 | 500 | 0,69 |

S (% masse)              = 60,0
Cl (% masse)             = 0,86
Viscosité à 100° C (mm²/s)    = 5,7

### Exemple 34

L'expérimentation de l'exemple 33 est reprise en utilisant 159,3 g de $Na_2S$ à 60% (1,225 mole), 163,4 g de soufre (soit 5,096 atomes-grammes), le rapport molaire $Na_2S/S$ étant dans cet essai de 0,24, et un mélange constitué de 125 g de produit d'addition $S_2Cl_2$/isobutylène et de 93,4 g de chlorure de n-butyle (1,01 mole).

Après traitements, on récupère 286,3 g de produit dont les caractéristiques sont les suivantes:

S (% masse)              = 61,7
Cl (% masse)             = 0,9
Viscosité à 100° C (mm²/s)    = 6,2

### Exemple 35

L'expérimentation de l'exemple 33 est reprise en utilisant 159,3 g de $Na_2S$ à 60% (1,225 mole), 196,05 g de soufre (soit 6,115 atomes-grammes), le rapport molaire $Na_2S/S$ étant dans cet essai de 0,2, et un mélange constitué de 93,65 g de produit d'addition $S_2Cl_2$/isobutène et de 116,8 g de chlorure de n-butyle (1,263 mole).

Après traitements, on récupère 252,7 g de produit dont les caractéristiques sont les suivantes:

S (% masse)              = 63,0
Cl (% masse)             = 0,54
Viscosité à 100° C (mm²/s)    = 5,23

La solubilité des additifs préparés comme décrit dans les exemples 33, 34 et 35 est mesurée à deux températures dans deux huiles minérales de compositions différentes:

huile minérale 100 Neutral Solvent
huile naphténique Spindle.

Les résultats obtenus sont rassemblés dans le tableau VIII suivant:

*Tableau VIII*

| Additif de l'exemple | Quantité d'additif (% masse) | Solubilité après 15 jours dans: | | | |
|---|---|---|---|---|---|
| | | 100 Neutral Solvent | | Spindle naphténique | |
| | | 20°C | −5°C | 20°C | −5°C |
| 33 | 2 | limpide | louche | limpide | limpide |
| | 4 | limpide | louche | limpide | limpide |
| | 7 | louche | trouble | limpide | limpide |
| | 10 | trouble | — | limpide | limpide |
| | 20 | — | — | limpide | limpide |
| 34 | 2 | limpide | louche | limpide | limpide |
| | 4 | louche | louche | limpide | limpide |
| | 7 | louche | trouble | limpide | limpide |
| | 10 | trouble | — | limpide | limpide |
| | 20 | — | — | limpide | limpide |
| 35 | 2 | limpide | trouble | limpide | limpide |
| | 4 | trouble | — | limpide | limpide |
| | 7 | — | — | limpide | limpide |
| | 10 | — | — | limpide | limpide |
| | 20 | — | — | limpide | limpide |

*Exemple 36: Evaluation des propriétés extrême-*
*pression des additifs*

On a réalisé des essais mettant en évidence les propriétés extrême-pression des additifs préparés selon les exemples 33, 34 et 35 dans des formulations du type huiles de coupe des métaux, au moyen d'une machine 4 billes selon la procédure ASTM D 2783.

Les formulations lubrifiantes étudiées étaient constituées d'une huile 100 Neutral Solvent renfermant 3% de chlore sous forme de paraffine chlorée, et 1% de soufre sous forme d'additifs soufrés des exemples 33, 34 et 35. Les résultats obtenus sont rassemblés dans le tableau IX ci-après:

*Tableau IX*

| Paraffine chlorée % masse | Additif de l'exemple | S % masse de l'additif soufré | % masse de l'additif dans l'huile 100 N S | Solubilité dans l'huile 100 NS | | Essais 4 billes E.P. | | |
|---|---|---|---|---|---|---|---|---|
| | | | | 20°C | 0°C | Indice charge-usure | Charge avant grip-page (Kgf) | Charge de soudure (Kgf) |
| sans | sans | — | — | — | — | 21,4 | 50 | 126 |
| 4,62 | sans | — | — | limpide | limpide | 38,1 | 80 | 200 |
| sans | 33 | 60 | 1,67 | limpide | louche | 42,8 | 80 | 315 |
| 4,62 | 33 | 60 | 1,67 | limpide | limpide | 93,8 | 100 | 620 |
| 4,62 | 34 | 61,7 | 1,62 | limpide | limpide | 97,2 | 100 | 620 |
| 4,62 | 35 | 63 | 1,59 | limpide | limpide | 101,0 | 100 | 620 |

Ces résultats montrent que l'emploi des additifs selon l'invention se traduit par une augmentation considérable de la charge de soudure des billes.

*Exemple 37*

Dans un réacteur de 1 l, on introduit 159,3 g de $Na_2S$ à 60% (1,225 mole), 22,4 g de soufre en fleur (0,7 atome-gramme), 28,35 g de soude en pastilles, 296 cm³ d'eau et 3 g de chlorure de tétrabutylammonium (le rapport molaire $Na_2S$/S utilisé dans l'essai est égal à 1,75). Le mélange est chauffé à 80° C sous agitation pendant une heure, puis la température est ramenée à 45° C. Cette solution est transférée dans une ampoule à brome chauffée extérieurement de façon à maintenir la température vers 45° C.

Dans un second réacteur de 1 l, on introduit 162,5 g du produit d'addition $S_2Cl_2$/isobutène, et 67 g d'acide monochloracétique (0,709 mole). Le mélange est chauffé à 50-55° C sous agitation pour homogénéisation.

Par l'intermédiaire de l'ampoule à brome chauffée, on introduit progressivement en 2 heures la solution chaude de polysulfure de sodium dans le mélange chloré en maintenant la température réactionnelle entre 55 et 60° C.

On porte ensuite le mélange au reflux (100-103° C) pendant 8 heures, on abaisse la température à 75° C, on ajoute 150 cm³ de benzène, on arrête l'agitation puis on laisse décanter.

La phase aqueuse contenant l'excès du polysulfure de sodium et le sel de sodium de l'acide polythiodiglycolique qui s'est formé est éliminée.

La phase organique est mise à reflux pendant 3 heures avec 200 cm³ d'une solution de soude à 10% en masse sous bonne agitation. On abaisse la température à 75° C, puis on ajoute 10 g de NaCl pour faciliter la décantation; la phase aqueuse est ensuite éliminée.

La phase organique récupérée est traitée sous vigoureuse agitation avec 120 cm³ d'une solution aqueuse d'HCl 6N pendant une heure à 70° C. On laisse décanter, on écarte la solution aqueuse; la phase organique est lavée 2 fois avec 150 cm³ d'eau, elle est séchée sur $Na_2SO_4$, filtrée puis évaporée sous vide (2,7·10³ Pa à 100° C).

On recueille ainsi 125 g d'un produit organique jaune-orangé dont l'indice d'acide ($I_A$) correspond à une masse molaire équivalente de 1650 environ; par ailleurs, le spectre infrarouge du composé montre la présence de groupements carbonyles.

Les caractéristiques du composé soufré carboxylique ainsi obtenu sont les suivantes:

S (% masse)　　　　　　　　 = 40,1
Cl (% masse)　　　　　　　　 = 0,94
Viscosité à 100° C (mm²/s)　 = 31,5
$I_A$　　　　　　　　　　　　 = 34,0

*Exemple 38*

Dans un réacteur de 1 l, on introduit successivement 159,3 g de $Na_2S$ à 60%, 22,4 g de soufre, 296 g d'eau, 31 cm³ d'alcool isopropylique et 3 g de chlorure de tétrabutylammonium. On chauffe le mélange pendant une heure à 80° C sans agitation puis on refroidit à 45° C.

On ajoute alors en deux heures à cette solution constamment agitée un mélange constitué par 162,5 g de produit d'addition $S_2Cl_2$/isobutène et 67 g de chloro-1 propanol-2 (0,709 mole), en maintenant la température du mélange aqueux vers 78-80° C; on porte ensuite à reflux total (90-95° C) pendant 8 heures.

On arrête l'agitation et on laisse décanter à 75° C; on élimine la phase aqueuse contenant l'excès de polysulfure de sodium et le polythiodipropylèneglycol formé.

La phase organique est traitée à reflux (à environ 95° C) pendant 3 heures avec 200 cm³ de solution de soude aqueuse à 10% en masse.

On laisse refroidir à 75° C, on ajoute 100 cm³ de benzène, on arrête l'agitation et on laisse décanter.

La phase organique récupérée est lavée avec deux fois 150 cm³ d'eau, elle est séchée sur $Na_2SO_4$, filtrée puis évaporée à 100° C sous pression réduite ($2,7 \cdot 10^3$ Pa). On recueille ainsi 130 g d'un produit organique jaune sombre dont l'indice d'hydroxyle ($I_{OH}$) correspond à une masse moléculaire équivalente de 603; par ailleurs, le spectre infrarouge du composé montre la présence de groupements hydroxyles.

Les caractéristiques du composé soufré hydroxyle ainsi obtenu sont les suivantes:

S (% masse)            = 40,7
Cl (% masse)           = 0,01
Viscosité à 100° C (mm²/s)  = 5,2
$I_{OH}$               = 93

## Exemple 39

L'expérimentation de l'exemple 38 est reprise en utilisant un mélange constitué par 162,5 g de produit d'addition $S_2Cl_2$/isobutène et 57,1 g de chloro-2 éthanol (0,709 mole).

Après traitements, on récupère 134 g d'un produit organique jaune sombre dont l'indice d'hydroxyle ($I_{OH}$) correspond à une masse molaire équivalente d'environ 1600; par ailleurs, le spectre infrarouge du composé montre la présence de groupements hydroxyles.

Les caractéristiques du composé soufré hydroxylé ainsi obtenu sont les suivantes:

S (% masse)            = 41,6
Cl (% masse)           = 0,7
Viscosité à 100° C (mm²/s)  = 7,72
$I_{OH}$               = 35

## Exemple 40

Dans un réacteur de 1 l, on introduit 187,5 g de produit d'addition $S_2Cl_2$/isobutène et 65 g de chloro-4 phénol, le mélange est chauffé à 50-55° C pour homogénéisation.

Par l'intermédiaire d'une ampoule à brome extérieurement chauffée pour maintenir une température intérieure de 45° C, on introduit dans le réacteur agité une solution constituée par 159,3 g du $Na_2S$, 22,4 g de soufre, 31 cm³ d'isopropanol, 296 g d'eau et 3 g de chlorure de tétrabutylammonium, en maintenant la température réactionnelle entre 55 et 60° C.

On porte ensuite le mélange agité au reflux pendant 8 heures.

Après décantation et élimination de la phase aqueuse, la phase organique est traitée avec 200 cm³ de solution aqueuse de soude à 10% puis avec 82 cm³ d'HCl 6N à 70° C pendant une heure.

Après décantation, lavages, séchage, filtration et évaporation sous pression réduite, on récupère 126 g de produit organique jaune-brun dont le spectre infrarouge montre la présence de groupements phénoliques.

Les caractéristiques du composé soufré phénolique ainsi obtenu sont les suivantes:

S (% masse)            = 38,2
Cl (% masse)           = 0,95
Viscosité à 100° C (mm²/s)  = 13,6
$I_{OH}$               = 23

## Exemple 41

L'expérimentation de l'exemple 38 est reprise en utilisant un mélange constitué de 200 g de produit d'addition $S_2Cl_2$/isobutène, de 18,5 g de chlorure de n-butyle et de 53,6 g de chlorométhyle-4 ditertiobutyle-2,6 phénol.

Après reflux pendant 8 heures (85-90° C), traitement à la soude, lavage, séchage et filtration, on récupère 200 g de produit jaune-orangé dont le spectre infrarouge montre la présence de groupements phénoliques encombrés.

Les caractéristiques du composé phénolique sont les suivantes:

S (% masse)            = 37,4
Cl (% masse)           = 0,75
Viscosité à 100° C (mm²/s)  = 7,1

## Exemple 42

Dans un réacteur de 1 l, on introduit successivement 144,8 g du $Na_2S$ à 60%, 20,4 g de soufre, 222 cm³ d'eau, 31 cm³ d'isopropanol et 3 g de chlorure de tétrabutylammonium. Le mélange est chauffé à 80° C pendant une heure sous agitation, puis la température est ramenée à 45° C.

On ajoute alors, en deux heures, à cette solution constamment agitée un mélange constitué de 162,5 g du produit d'addition $S_2Cl_2$/isobutène et de 65,5 g de chloro-1 époxy-2,3 propane, en maintenant la température réactionnelle entre 50 et 55° C.

On porte ensuite le mélange pendant 15 heures à la température de reflux (94-96° C), puis on ajoute 150 cm³ de toluène. Après arrêt du chauffage et de l'agitation, on laisse décanter.

La phase organique est ensuite traitée à reflux pendant 3 heures avec 200 cm³ d'une solution de soude à 10%, lavée 2 fois avec 200 cm³ d'eau, séchée sur $Na_2SO_4$, filtrée et évaporée à 100° C sous $2,7 \cdot 10^3$ Pa.

On recueille ainsi 120 g d'un produit organique sombre dont le spectre infrarouge révèle la présence de groupements hydroxyles.

Les caractéristiques du composé soufré hydroxylé ainsi obtenu sont les suivantes:

S (% masse)            = 41,4
Cl (% masse)           = 0,8
Viscosité à 100° C (mm²/s)  = 16,3
$I_{OH}$               = 76

## Exemple 43

Dans cet exemple, on opère en continu en utilisant les mêmes proportions relatives de réactifs que dans l'exemple 6.

La description de cet exemple se réfère à la figure annexée.

Un courant de 123 volumes/h de mélange halogéné produit d'addition $S_2Cl_2$/isobutène/n-BuCl (ligne 1, pompe doseuse P1), et un courant de 248 volumes/h de solution hydroalcoolique de polysulfure de sodium (ligne 2, pompe doseuse P2), sont envoyés simultanément dans le réacteur R1, constamment agité et maintenu entre 60 et 65° C sous une pression absolue de 0,203 MPa.

Après un temps de séjour moyen de 2 heures dans R1, les 371 volumes/h de courant effluent sont dirigés par surverse (ligne 3) dans le réacteur R2, constamment agité et maintenu à 105° C, sous la même pression absolue de 0,203 MPa.

Après un temps de séjour moyen de 8 heures, le courant effluent est dirigé par la ligne de surverse 4 vers le séparateur S1, où la décantation des phases s'effectue à 80° C en un temps moyen de 0,5 heure (pression absolue 0,203 MPa).

Le courant de 371 volumes/h de phase organique soufrée supérieure est envoyé par la ligne 2 dans un détendeur G1 du type «GROVE BACK-PRESSURE», où il est détendu de la pression imposée (0,203 MPa) à la pression atmosphérique, puis il est dirigé vers le réacteur R3.

La phase aqueuse inférieure du séparateur S1 est éliminée par l'intermédiaire de la ligne 6, de la pompe doseuse P3 et du détendeur G2 du même type que G1.

Le réacteur R3, constamment agité et maintenu à 95-100° C (pression atmosphérique), est alimenté simultanément par le courant de 371 volumes/h de phase organique soufrée (ligne 5) et par un courant de 116 volumes/h de solution aqueuse de soude à 10% en masse (ligne 7, pompe doseuse P4). Après un temps de contact moyen de 6 heures, les 221 volumes/h de mélange s'écoulent par surverse (ligne 8, pompe doseuse P5) dans le séparateur S2, où la décantation s'effectue en 0,5 heure à 60° C.

Les 100 volumes/h de phase organique soufrée supérieure sont dirigés (ligne 9, pompe doseuse P6) vers le réacteur R4, pendant que le courant de soude usée est éliminé à la base du séparateur S2 (ligne 10, pompe doseuse P7).

Le réacteur R4, constamment agité, est alimenté simultanément par les 100 volumes/h de phase organique soufrée provenant de S2, et par un courant de 115 volumes/h d'eau de lavage (ligne 11, pompe doseuse P8).

Après un temps de séjour moyen de 0,5 heure à 60° C, le mélange est envoyé par surverse par la ligne 12 dans le décanteur S3, où s'effectue à 60° C la séparation des phases en 0,5 heure.

La phase aqueuse surnageante est envoyée par surverse (ligne 13) dans le mélangeur M1, où la solution aqueuse de soude à 10% est préparée avec alimentation de soude concentrée par la ligne 14 et appoint d'eau par la ligne 15.

Le courant de 100 volumes/h de phase organique soufrée est repris à la base du séparateur S3 (ligne 16, pompe doseuse P9) pour être dirigé vers un évaporateur continu en couche mince ($2,7 \cdot 10^3$ Pa/100° C), puis vers un filtre et enfin vers le stockage.

Les caractéristiques physico-chimiques de l'additif ainsi obtenu sont les suivantes:

| | |
|---|---|
| S (% masse) | = 46,1 |
| Cl (% masse) | = 0,52 |
| Viscosité à 100° C (mm²/s) | = 6,1 |

**Revendications**

1. Procédé de préparation d'une oléfine polysulfurée, caractérisé en ce qu'il comprend les étapes suivantes:

(1) On fait réagir au moins un composé choisi parmi le monochlorure et le dichlorure de soufre avec au moins une monooléfine de 2 à 5 atomes de carbone, en une proportion de 1,5 à 2,5 moles de monooléfine par mole de monochlorure et/ou de dichlorure de soufre, formant ainsi un produit d'addition ou adduct;

(2) on met en contact ledit adduct et au moins un halogénure d'hydrocarbyle choisi parmi les chlorures, les bromures et les iodures d'alkyle de $C_1$ à $C_{12}$, de cycloalkyle ou de cycloalkyle substitué de $C_5$ à $C_{12}$ et d'arylalkyle ou d'arylalkyle substitué de $C_6$ à $C_{12}$, la proportion dudit halogénure d'alkyle correspondant à 1-70% en atomes-grammes d'halogène par rapport au nombre d'atomes-grammes d'halogène de l'ensemble formé par ledit adduct et ledit halogénure d'hydrocarbyle, avec au moins un composé sulfuré choisi parmi les sulfures, les hydrogénosulfures et les polysulfures de métaux alcalins, d'ammonium ou de métaux alcalino-terreux, mis en jeu en une proportion d'environ 0,4 à 0,8 mole par atome-gramme d'halogène contenu dans l'ensemble formé par ledit adduct et ledit halogénure d'hydrocarbyle, et une proportion de soufre élémentaire de 0 à 7 atomes-grammes par mole dudit composé sulfuré, au sein d'un milieu consistant en de l'eau ou un mélange d'eau et de monoalcool aliphatique; et

(3) on chauffe le mélange résultant et, après séparation en deux phases, on récupère l'oléfine polysulfurée dans la phase organique.

2. Procédé selon la revendication 1, caractérisé en ce que, dans l'étape (1), on utilise comme monooléfine aliphatique de l'isobutène ou un mélange d'isobutène avec une proportion mineure de diisobutène.

3. Procédé selon la revendication 1 ou 2, caractérisé en ce que ledit halogénure d'hydrocarbyle est choisi parmi les chlorures, bromures et iodures de méthyle, d'éthyle, d'isopropyle, de n-propyle, de tert-butyle, d'isobutyle, de n-butyle, de tert-amyle, d'isoamyle, de n-amyle, de n-hexyle, d'éthyl-2 hexyle, de n-octyle, de cyclohexyle et de benzyle.

4. Procédé selon l'une des revendications 1 à 3, caractérisé en ce que ledit halogénure d'hydrocarbure est constitué au moins en partie par un composé hydrocarboné monohalogéné portant au moins un groupement fonctionnel choisi parmi les fonctions alcools, phénols, acides carboxyliques, amines, amides et thiols.

5. Procédé selon l'une des revendications 1 à 4, caractérisé en ce que ledit composé sulfuré est choisi parmi le sulfure de sodium, l'hydrogénosulfure de sodium, et les polysulfures de sodium.

6. Procédé selon l'une des revendications 1 à 5, caractérisé en ce que la proportion de soufre élémentaire est de 0,4/1 à 7/1 atomes-grammes par mole de composé sulfuré.

7. Procédé selon l'une des revendications 1 à 6, caractérisé en ce que, dans l'étape (2), ledit adduct et ledit halogénure d'hydrocarbyle sont ajoutés au milieu contenant ledit composé sulfuré et éventuellement le soufre élémentaire et maintenu à une température de 20 à 100° C, en l'espace de 10 minutes à 3 heures et en ce que, dans l'étape (3), on chauffe à une température allant de 50° C jusqu'au reflux, pendant 3 à 10 heures.

8. Procédé selon l'une des revendications 1 à 7, caractérisé en ce qu'il comprend en outre une étape (4) dans laquelle le produit issu de l'étape (3) est traité par un composé basique.

9. Procédé selon l'une des revendications 1 à 8, caractérisé en ce que, à partir de l'étape (2), les opérations sont effectuées en continu, les réactifs mis en jeu dans l'étape (2) étant mis en contact en courants parallèles et selon un processus à contacts multiples.

10. Procédé selon l'une des revendications 1 à 9, caractérisé en ce que la proportion d'halogénure d'hydrocarbyle mise en jeu dans l'étape (2) est de 2 à 40% en atomes-grammes d'halogène par rapport au nombre d'atomes-grammes d'halogène de l'ensemble formé par ledit adduct et ledit halogénure d'hydrocarbyle.

11. Procédé selon la revendication 10, caractérisé en ce que la proportion de soufre élémentaire mise en jeu dans l'étape (2) est de 0,4/1 à 3,3/1 atomes-grammes par mole de composé sulfuré.

12. Procédé selon l'une des revendications 1 à 9, caractérisé en ce que la proportion d'halogénure d'hydrocarbyle mise en jeu dans l'étape (2) est d'environ 40 et 70% en atomes-grammes d'halogène par rapport au nombre d'atomes-grammes d'halogène de l'ensemble formé par ledit adduct et ledit halogénure d'hydrocarbyle.

13. Procédé selon la revendication 12, caractérisé en ce que la proportion de soufre élémentaire mise en jeu dans l'étape (2) est de 3,3/1 à 7/1 atomes-grammes par mole de composé sulfuré.

14. Oléfine polysulfurée, caractérisée en ce qu'elle est obtenue par un procédé selon l'une des revendications 1 à 13.

15. Oléfine polysulfurée selon la revendication 14, caractérisée en ce qu'elle présente une teneur en soufre allant jusqu'à environ 45-60% en masse, et une viscosité cinématique à 100° C de 4 à 20 mm²/s.

16. Oléfine polysulfurée selon la revendication 14, caractérisée en ce qu'elle présente une teneur en soufre d'environ 60 à 65% en masse et une viscosité cinématique à 100° C de 4 à 15 mm²/s.

17. Utilisation d'une oléfine polysulfurée selon la revendication 15 comme additif pour huile d'engrenages, dans laquelle ladite oléfine polysulfurée est ajoutée à raison de 0,5 à 7% en masse dans une huile lubrifiante minérale ou synthétique.

18. Utilisation d'une oléfine polysulfurée selon l'une des revendications 15 et 16 comme additif dans une huile destinée au travail des métaux, dans laquelle ladite oléfine polysulfurée est ajoutée à raison d'environ 0,1 à 10% en masse par rapport à l'huile.

## Patentansprüche

1. Verfahren zur Herstellung von polysulfurierten Olefinen, dadurch gekennzeichnet, dass es die folgenden Stufen umfasst:
(1) man lässt mindestens eine Verbindung aus der Gruppe Schwefeldichlorid mit zumindest einem Monoolefin mit zwei bis fünf Kohlenstoffatomen in einem Mengenanteil von 1,5 bis 2,5 Mol Monoolefin pro Mol Schwefelmono- und/oder dichlorid reagieren und bildet so ein Additionsprodukt oder Addukt;
(2) man kontaktiert dieses Addukt und zumindest ein Kohlenwasserstoffhalogenid aus der Gruppe $C_1$ bis $C_{12}$-Alkyl-, gegebenenfalls substituierten $C_5$ bis $C_{12}$-Cycloalkyl- und ggf. substituierten $C_6$ bis $C_{12}$-Aralkylchlorid, -bromid und -jodid in einem Mengenanteil dieses Alkylhalogenids, der 1 bis 70% an Grammatom Halogen, bezogen auf die Anzahl der Grammatom des Halogens der durch das Addukt und das Kohlenwasserstoffhalogenid gebildeten Gesamtheit, ergibt, mit zumindest einer sulfurierten Verbindung aus der Gruppe der Sulfide, Hydrogensulfide und Polysulfide der Alkalimetalle, des Ammoniums oder der Erdalkalimetalle, die in einem Mengenanteil von etwa 0,4 bis 0,8 Mol pro Grammatom Halogen, das in der durch das Addukt und das Kohlenwasserstoffhalogenid gebildeten Gesamtheit enthalten ist, eingesetzt wird, und mit einem Mengenanteil an elementarem Schwefel von 0 bis 7 Grammatom pro Mol dieser sulfurierten Verbindung, in einem Milieu, das aus Wasser oder einer Mischung von Wasser und einem aliphatischen Monoalkohol besteht, und
(3) man erhitzt die erhaltene Mischung und nach Trennung in zwei Phasen gewinnt man das polysulfurierte Olefin in der organischen Phase.

2. Verfahren nach Anspruch 1, dadurch gekennzeichnet, dass man in der Stufe (1) als aliphatisches Monoolefin Isobuten oder ein Gemisch von Isobuten mit einem kleineren Mengenanteil an Diisobuten verwendet.

3. Verfahren nach Anspruch 1 oder 2, dadurch gekennzeichnet, dass das Kohlenwasserstoffhalogenid gewählt wird aus der Gruppe Methyl-, Ethyl-, Isopropyl-, n-Propyl-, tert-Butyl-, Isobutyl-, n-Butyl-, tert-Amyl-, Isoamyl-, n-Amyl-, n-Hexyl-, Ethyl-2-hexyl-, n-Octyl-, Cyclohexyl- und Benzylchloriden, -bromiden und -jodiden.

4. Verfahren nach einem der Ansprüche 1 bis 3, dadurch gekennzeichnet, dass das Kohlenwasserstoffhalogenid zumindest teilweise aus einer monohalogenierten Kohlenwasserstoffverbindung besteht, die mindestens eine funktionelle Gruppe ausgewählt aus den Funktionen Alkohole, Phenole, Carbonsäuren, Amine, Amide und Thiole enthält.

5. Verfahren nach einem der Ansprüche 1 bis 4, dadurch gekennzeichnet, dass die sulfurierte Verbindung aus der Gruppe Natriumsulfid, Natriumhydrogensulfid und den Natriumpolysulfiden ausgewählt ist.

6. Verfahren nach einem der Ansprüche 1 bis 5, dadurch gekennzeichnet, dass der Mengenanteil an elementarem Schwefel 0,4:1 bis 7:1 Grammatom pro Mol der sulfurierten Verbindung beträgt.

7. Verfahren nach einem der Ansprüche 1 bis 6, dadurch gekennzeichnet, dass in der Stufe (2) das Addukt und das Kohlenwasserstoffhalogenid in einem Milieu, das diese sulfurierte Verbindung und ggf. elementaren Schwefel enthält und bei einer Temperatur von 20 bis 100° C gehalten wird, während einer Zeitspanne von 10 min bis 3 h zugesetzt werden und dass man in der Stufe (3) während 3 bis 10 h auf eine Temperatur erhitzt, die von 50° C bis zum Rückfluss geht.

8. Verfahren nach einem der Ansprüche 1 bis 7, dadurch gekennzeichnet, dass es ausserdem eine Stufe (4) enthält, worin das aus der Stufe (3) kommende Produkt mit einer basischen Verbindung behandelt wird.

9. Verfahren nach einem der Ansprüche 1 bis 8, dadurch gekennzeichnet, dass ab der Stufe (2) kontinuierlich gearbeitet wird, wobei die in Stufe (2) eingesetzten Reaktionskomponenten in parallelen Strömen und nach einer Arbeitsweise des Mehrfachkontaktes kontaktiert werden.

10. Verfahren nach einem der Ansprüche 1 bis 9, dadurch gekennzeichnet, dass der Mengenanteil des in die Stufe (2) eingesetzten Kohlenwasserstoffhalogenids 2 bis 40% an Grammatom Halogen, bezogen auf die Anzahl der Grammatom Halogen der durch das Addukt und das Kohlenwasserstoffhalogenid gebildeten Gesamtheit, beträgt.

11. Verfahren nach Anspruch 10, dadurch gekennzeichnet, dass der Mengenanteil des in Stufe (2) eingesetzten elementaren Schwefels 0,4:1 bis 3,3:1 Grammatom pro Mol der sulfurierten Verbindung beträgt.

12. Verfahren nach einem der Ansprüche 1 bis 9, dadurch gekennzeichnet, dass der Mengenanteil des in Stufe (2) eingesetzten Kohlenwasserstoffhalogenids etwa 40 bis 70% an Grammatom Halogen, bezogen auf die Anzahl der Grammatom Halogen der durch das Addukt und das Kohlenwasserstoffhalogenid gebildeten Gesamtheit, beträgt.

13. Verfahren nach Anspruch 12, dadurch gekennzeichnet, dass der Mengenanteil des in der Stufe (2) eingesetzten elementaren Schwefels 3,3:1 bis 7;1 Grammatom pro Mol sulfurierter Verbindung beträgt.

14. Polysulfuriertes Olefin, dadurch gekennzeichnet, dass es nach einem Verfahren gemäss einem der Ansprüche 1 bis 15 erhalten ist.

15. Polysulfuriertes Olefin nach Anspruch 14, dadurch gekennzeichnet, dass es einen Gehalt an Schwefel aufweist, der bis zu etwa 45 bis 60 Masse-% geht, sowie eine kinematische Viskosität bei 100° C von 4 bis 20 mm²/sec.

16. Polysulfuriertes Olefin nach Anspruch 14, dadurch gekennzeichnet, dass es einen Schwefelgehalt von etwa 60 bis 65 Masse-% und eine kinematische Viskosität bei 100° C von 4 bis 15 mm²/sec aufweist.

17. Verwendung eines polysulfurierten Olefins nach Anspruch 15 als Zusatz für Getriebeöl, wobei dieses polysulfurierte Olefin in einer Menge von 0,5 bis 7 Masse-% dem schmierenden Mineral- oder Syntheseöl zugesetzt wird.

18. Verwendung eines polysulfurierten Olefins nach einem der Ansprüche 15 und 16 als Zusatz zu einem Öl, das für die Metallbearbeitung bestimmt ist, wobei dieses polysulfurierte Olefin in einer Menge von etwa 0,1 bis 10 Masse-%, bezogen auf Öl, zugesetzt ist.

**Claims**

1. A method for the preparation of an olefin polysulfide, characterized in that it comprises the following steps:
(1) At least one compound chosen from sulfur monochloride or dichloride is reacted with at least one mono-olefin containing 2 to 5 carbon atoms, in a proportion of 1.5 to 2.5 moles of mono-olefin per mole of sulfur monochloride and/or dichloride, thereby forming an addition compound or adduct;
(2) said adduct is brought into contact with at least one hydrocarbyl halide chosen from $C_1$ to $C_{12}$ alkyl, $C_5$ to $C_{12}$ cycloalkyl or substituted cycloalkyl and $C_6$ to $C_{12}$ arylalkyl or substituted arylalkyl chlorides, bromides and iodides, the proportion of said hydrocarbyl halide corresponding to 1-70% in gram-atoms of halogen with respect to the number of gram-atoms of halogen in the aggregate formed by said adduct and said hydrocarbyl halide, with at least one sulfur compound selected from the sulfides, hydrosulfides and polysulfides of alkali metals, ammonium or alkaline-earth metals, used in a proportion of about 0.4 to 0.8 mole per gram-atom of halogen contained in the aggregate formed by said adduct and said hydrocarbyl halide, and a proportion of elemental sulfur of 0 to 7 gram-atoms per mole of said sulfur compound, in a medium consisting of water or a mixture of water and an aliphatic monoalcohol; and
(3) the resultant mixture is heated and, after separation into two phases, the olefin polysulfide is obtained from the organic phase.

2. A method according to Claim 1, characterized in that in step (1), isobutene or a mixture of isobutene with a minor proportion of diisobutene is used as the aliphatic mono-olefin.

3. A method according to either Claim 1 or 2, characterized in that said hydrocarbyl halide is chosen from methyl, ethyl, isopropyl, n-propyl, tert-butyl, isobutyl, n-butyl, tert-amyl, isoamyl, n-amyl, n-hexyl, 2-ethylhexyl, n-octyl, cyclohexyl and benzyl chlorides, bromides and iodides.

4. A method according to any of the Claims 1 to 3, characterized in that said hydrocarbyl halide consists at least partly of a monohalogenated hydrocarbon compound containing at least one functional group chosen from alcohol, phenol, carboxylic acid, amine, amide and thiol functional groups.

5. A method according to any of the Claims 1 to 4, characterized in that said sulfur compound is chosen from sodium sulfide, sodium hydrosulfide and sodium polysulfides.

6. A method according to any of the Claims 1 to 5, characterized in that the proportion of elemental sulfur is 0.4/1 to 7/1 gram-atoms per mole of sulfur compound.

7. A method according to any of the Claims 1 to 6, characterized in that in step (2), said adduct and said hydrocarbyl halide are added to a medium containing said sulfur compound and if necessary elementary sulfur and in that a temperature of 20 to 100° C is maintained for a period of 10 minutes to three hours and in that, in step (3), the mixture is heated to a temperature in the 50° C to the reflux temperature range, for 3 to 10 hours.

8. A method according to any of the Claims 1 to 7, characterized in that it further comprises a step (4) in which the product derived from step (3) is treated with a basic compound.

9. A method according to any of the Claims 1 to 8, characterized in that, from step (2), the operations are effected continuously, the reagents used in step (2) being brought into contact in a parallel flow and according to a multiple-contact method.

10. A method according to any of the Claims 1 to 9, characterized in that the proportion of hydrocarbyl halide used in step (2) is 2 to 40% in gram-atoms of halogen with respect to the number of gram-atoms of halogen of the aggregate formed by said adduct and said hydrocarbyl halide.

11. A method according to Claim 10, characterized in that the proportion of elemental sulfur used in step (2) is 0.4/1 to 3.3/1 gram-atoms per mole of sulfure compound.

12. A method according to any of the Claims 1 to 9, characterized in that the proportion of hydrocarbyl halide used in step (2) is about 40 to 70% in gram-atoms of halogen with respect to the number of gram-atoms of halogen in the aggregate formed by said adduct and said hydrocarbyl halide.

13. A method according to Claim 12, characterized in that the proportion of elemental sulfur used in step (2) is 3.3/1 to 7/1 gram-atoms per mole of sulfur compound.

14. An olefin polysulfide, characterized in that it is obtained by a method according to Claims 1 to 13.

15. An olefin polysulfide according to Claim 14, characterized in that it has a sulfur content ranging up to about 45 to 60% in weight and a kinematic viscosity at 100° C of 4 to 20 mm²/s.

16. An olefin polysulfide according to Claim 14, characterized in that it has a sulfur content of about 60 to 65% by weight and a kinematic viscosity at 100° C of 4 to 15 mm²/s.

17. A lubricating composition comprising a major proportion of a mineral or synthetic lubricating oil and a minor proportion, sufficient to improve its extreme-pressure properties, of at least one olefin polysulfide according to Claim 15.

18. A lubricating composition comprising a major proportion of a mineral lubricating oil and a minor proportion, sufficient to improve its extreme-pressure properties, of at least one olefin polysulfide according to Claim 16.

0 159 936